# EUROPÄISCHE PATENTSCHRIFT

(11) **EP 1 040 917 B1**
(45) Veröffentlichungstag und Bekanntmachung des Hinweises auf die Patenterteilung: **02.07.2003**
(21) Anmeldenummer: 00104433.8
(22) Anmeldetag: 03.03.2000
(51) Int. Cl.: B41F 13/008, B41F 13/00

(54) **Verfahren und Vorrichtung zur Kompensation der Drehschwingungen einer Druckmaschine**
Method and device for compensating torsional vibrations of a printing press
Procédé et dispositif à compensation de vibrations torsionelles d'une machine à imprimer

(30) Priorität: 31.03.1999 DE 19914627
(43) Veröffentlichungstag der Anmeldung: 04.10.2000
(73) Patentinhaber: Heidelberger Druckmaschinen Aktiengesellschaft, 69115 Heidelberg (DE)
(72) Erfinder: Buck, Bernhard, Dr., 69126 Heidelberg 7 (DE); Merz, Michael, Dr., 69207 Sandhausen (DE)

(56) Entgegenhaltungen:
- EP-A- 0 230 518
- EP-A- 0 592 850
- DE-A- 2 948 412
- DE-A- 19 619 142
- DE-C- 3 527 711
- US-A- 4 935 838

## Beschreibung

Die Erfindung betrifft ein Verfahren zur Kompensation der Drehschwingungen einer Druckmaschine durch Einbringung von Drehmomenten, die die Schwingungsanregung kompensieren.

Die Erfindung betrifft weiterhin eine Vorrichtung zur Durchführung dieses Verfahrens mit mindestens einem Mittel zur Einbringung von Drehmomenten in den Antriebsstrang einer Druckmaschine zur Kompensation von Schwingungsanregungen.

An Druckmaschinen treten verschiedene Arten von Schwingungen auf, die die Druckqualität beeinflussen. Entstehungsquellen von Schwingungen sind vorwiegend Zylinderkanäle sowie Bogenübergabeelemente und weitere diskontinuierlich arbeitende Maschinenelemente. Dies führt zum einen zu Biegeschwingungen in den Walzen und Zylindern, jedoch auch zu Drehschwingungen von Zylindern oder Trommeln. Letztere setzen sich über die Zahnräder des Zahnradzuges fort. Die entstehenden Drehschwingungen können mit einer Anzahl von Eigenformen und diesen zugeordneten Amplituden-Zeitverläufen beschrieben werden. Die Eigenformen geben dabei eine Amplitudenortsverteilung wieder. Sie sind von der Anregung unabhängige Eigenschaften einer Druckmaschine und hängen von der Anzahl der Druckwerke und der Bauweise der Maschine ab. Derartige Maschinenschwingungen können durch passive und aktive Zusatzsysteme bekämpft werden.

*Aus der DE 196 19 142 A1 ist ein Mechanismus zum Ausschluss kritischer Geschwindigkeiten aus den Geschwindigkeitsbereichen des normalen Maschinenbetriebs bekannt. Hier wird vorgeschlagen zwischen einer Antriebseinheit und einer angetriebenen Einheit (Druckwerk) eine steifigkeitsveränderbare Kupplung vorzusehen, wodurch kritische Geschwindigkeiten der Druckmaschine d. h. Geschwindigkeiten bei denen die Eigertfrequenzen mit den Frequenzen der Torsionsschwingungsanregungen* übereinstimmen, aus dem vorbestimmten Bereich der normalen Betriebsgeschwindigkeiten der Druckmaschine ausgeschlossen werden.

Aus der EP 0 592 850 B1 ist eine Vorrichtung und ein Verfahren bekannt, das aktive Betätigungselemente, beispielsweise Motoren, an den einzelnen Zylindern vorsieht, um über Messungen und Steuerungen die Motoren derart anzusteuern, daß die Schwingungen dämpfende Stellkräfte entstehen. Es handelt sich dabei um keine von vornherein gezielte Gegenstrategie gegen Schwingungen in den maschinentypischen Eigenformen, sondern die Schwingungen, die entstehen, werden gemessen und danach am Ort der Messung bekämpft. Auf diese Weise ist die Kompensation jedoch zeitlich nicht optimiert und erfordert einen hohen Regelaufwand, wobei die Gefahr besteht, daß die Regelung entweder eine zu große Zeitverzögerung aufweist oder ihrerseits Schwingungen verursacht. Die Kompensationsmaßnahmen sind auch bezüglich ihres Orts nicht optimiert. Wird lediglich ein einziges Betätigungsglied angeordnet, so kann dies im Nulldurchgang einer Eigenform der Druckmaschine liegen und es wird an dieser Stelle weder ein Wert der Schwingung in dieser Eigenform ermittelt, noch können dort Gegenmomente eingebracht werden. Erfolgt die Kompensationsmaßnahme an einem Ort niedriger Amplituden der Eigenform, werden entsprechend höhere Momente benötigt. In jedem Fall ist ein hoher Aufwand an Sensorik und Regelungstechnik erforderlich.

Die europäische Patentanmeldung EP 0 230 518 A2 offenbart ein Verfahren und eine Vorrichtung zum Dämpfen von Torsionsschwingungen in Druckmaschinen. Der Patentanmeldung liegt die Aufgabe zugrunde, ein Verfahren und eine Vorrichtung zu schaffen, mit denen Torsionsschwingungen in einem Mehrmassetorsionsschwinger, wobei es sich bei dem Mehrmassetorsionsschwinger vorzugsweise um eine Rollenoffsetrotationsdruckmaschine in Linienbauweise handelt, mit einem aktiven System gedämpft werden können. Die Dämpfung der Schwingungen wird dadurch erreicht, dass an einem Ende oder in der Nähe des Endes des Mehrmassetorsionsschwingers fortlaufend ein Torsionsschwingungsmoment eingeleitet wird, welches dem Moment des Mehrmassetorsionsschwingers entgegengesetzt wirkt. Dazu werden die Torsionsschwingungen des Mehrmassetorsionsschwingers am betreffenden Ende fortlaufend gemessen und in ein Signal umgesetzt, welches eine Regelstrecke zugeführt wird, die die Erzeugung eines entsprechenden Gegenmoments vornimmt. Das Stellglied, welches dieses Gegenmoment erzeugt, kann dabei ein Elektromotor oder ein Hydraulikmotor sein.

Der Erfindung liegt daher die Aufgabe zugrunde, ein Verfahren und eine Vorrichtung der eingangs genannten Art derart auszugestalten, daß eine optimale Kompensation von Drehschwingungen einer Druckmaschine mit möglichst geringem Aufwand erzielt wird.

Bezüglich des Verfahrens wird die Aufgabe dadurch gelöst, daß mindestens eine der Eigenformen einer Druckmaschine bestimmt wird, daß für mindestens einen Ort des Antriebsstrangs der Druckmaschine, an dem die Eigenform nicht Null ist, das jeweilige Gegenmoment für die Kompensation der Momente, die zur Schwingung in der Eigenform anregen, ermittelt und hinterlegt wird, und daß das Gegenmoment am entsprechenden Ort derart aufgebracht wird, daß durch die Aufbringung des mindestens einen Gegenmoments die Schwingung maximal reduziert wird.

Bezüglich der Vorrichtung wird die Aufgabe dadurch gelöst, daß das mindestens eine Mittel an einem Ort des Antriebsstrangs angeordnet ist, an dem die Eigenform, deren Anregung zu Kompensieren ist, nicht Null ist, daß das Moment für die Kompensation der Momente, die zur Schwingung in der Eigenform anregen, dem mindestens einen Mittel eingegeben ist und das mindestens eine Mittel das Gegenmoment dem Antriebsstrang vermittelt

Das Wesen der Erfindung besteht darin, daß bereits die Entstehung der Schwingungen weitgehendst verhindert wird. Dazu wird für eine Druckmaschine entweder die Eigenform mit dem größten Anteil an der Gesamtschwingung oder diese und weitere Eigenformen ermittelt. Dann wird für einen beliebigen Ort der Druckmaschine, an dem die entsprechende Eigenform nicht Null ist, der Zeitverlauf bestimmt, den ein Gegenmoment aufweisen muß, um die Momente, die zur Schwingung in der Eigenform anregen, zu kompensieren. Dieses Gegenmoment wird dann aufgebracht, um die Anregung zur Schwingung von vornherein zu verhindern. Dadurch kann die Anregung für die Schwingung in einer Eigenform gezielt verhindert werden, ohne daß die Schwingungen in den übrigen Eigenformen wesentlich stärker erregt werden. Da meist die Schwingung in einer Eigenform dominiert, das ist regelmäßig die erste Eigenform, kann durch Einleitung von Gegenmomenten an einer oder an wenigen Stellen eine deutliche Reduktion der Schwingungen über die gesamte Länge der Druckmaschine erzielt werden. Werden auch Schwingungen in weiteren Eigenformen kompensiert, so treten unter Umständen Verstärkungen in den Schwingungen der anderen Eigenformen auf, die ebenfalls zu kompensieren sind. Es sind also die gegenseitigen Rückwirkungen in die Momente zur Kompensation mit einzuberechnen. Dabei weisen die Anregungen der betrachteten Eigenform zwar eine gewisse Drehzahlabhängigkeit auf, diese Abhängigkeit ist jedoch oft nicht so stark, daß sie in die Bestimmung der Gegenmomente in jedem Fall einbezogen werden muß. Vielfach reicht es daher oft aus, für einen oder zwei Orte der Druckmaschine und eine Drehzahl das Gegenmoment zu bestimmen und aufzubringen, um eine wirkungsvolle Kompensation der Drehschwingungen der Druckmaschine zu erzielen. Eine derartige Maßnahme ist von sehr geringem Aufwand. Jedoch auch die drehzahlabhängige Einbringung von Gegenmomenten ist mit einem wesentlich geringeren Aufwand verbunden als die oben genannte Regelung nach dem Stand der Technik. Regelung und Sensorik sind beim erfindungsgemäßen Gegenstand nicht erforderlich.

Zweckmäßigerweise wird als Ort für die Aufbringung eines Gegenmoments ein Ort gewählt, an dem die Amplituden der betrachteten Eigenform hoch sind. An diesem Ort des Antriebsstrangs der Druckmaschine wird dann auch das Mittel angeordnet, das die Momente, die zur Schwingung anregen, durch Gegenmomente von vornherein kompensiert. Die genannte zweckmäßige Ausgestaltung ergibt sich daraus, daß im Nulldurchgang oder nahe des Nulldurchgangs keine Bekämpfung der Schwingungen möglich ist. Dagegen können am Ort der höchsten Amplituden der Eigenform die dieser Eigenform zugeordneten Schwingungen mit dem geringsten Aufwand an Gegenmomenten bekämpft werden.

Zur Bekämpfung der Drehschwingungen einer Druckmaschine kann die Eigenform herangezogen werden, die den größten Anteil an der Gesamtschwingung aufweist. Es handelt sich dabei in der Regel um die erste Eigenform. Es ist jedoch auch möglich, daß mehrere Eigenformen einer Druckmaschine für die Aufbringung von Gegenmomenten bestimmt werden. In diesem Fall müssen die Gegenmomente entsprechend berechnet oder gemessen werden. Es können jedoch auch weitere Mittel zur Aufbringung von Gegenmomenten angeordnet sein, wobei dann die Gegenmomente für jeden Ort - unter Berücksichtigung des Einflusses der an anderen Orten eingebrachten Gegenmomente - bestimmt werden müssen.

Die Gegenmomente sind zu einem gewissen Grad von verschiedenen Parametern abhängig. In der Regel ist deren Einfluß jedoch zu vernachlässigen und es können mittlere Werte gewählt werden. Den stärksten Einfluß übt die Drehzahl der Druckmaschine aus. Die Bestimmung der Gegenmomente kann jedoch bei vielen Maschinen ebenfalls für eine mittlere Maschinendrehzahl erfolgen. Es ist jedoch auch möglich, daß die Gegenmomente für verschiedene Maschinendrehzahlen bestimmt und aufgebracht werden. Entsprechend können jedoch auch andere Parameter berücksichtigt werden.

Außer Einflüssen auf die Stärke der erforderlichen Gegenmomente gibt es auch noch Einflüsse, die nicht die Stärke, sondern die Phasenlage betreffen. Dies ist bei Formatverstellungen im Widerdruck oder bei der Umstellung von Schöndruck auf Widerdruck oder umgekehrt der Fall. Da bei diesen Umstellungen die Phasenlage der die Schwingungen verursachenden Elemente verändert wird, ändert sich auch die Phasenlage der die Schwingung anregenden Momente und es muß deshalb auch die Phasenlage der Gegenmomente geändert werden.

Insbesondere für Maschinen mit einer Wendeeinrichtung wird vorgesehen, daß für eine Änderung der Phasenlage der erforderlichen Gegenmomenten mindestens zwei Teilmomente in den Antriebsstrang eingebracht werden, deren Phasenlage zueinander entsprechend verstellt werden kann. Es ist bei einer derartigen Maschine zweckmäßig, daß für jeden an eine Wendeeinrichtung angrenzenden Maschinenbereich die Gegenmomente separat bestimmt werden. Dies erfordert eine entsprechende Anpassung des hinterlegten Gegenmomentes oder es müssen mindestens zwei Mittel zur Einbringung von Drehmomenten an dem Antriebsstrang angebracht werden, so daß gesondert für jeden Maschinenbereich die entsprechenden Gegenmomente aufgebracht werden.Bei entsprechendem Einbau werden die Mittel mit Zylinderverstellungen mitverstellt und die richtige Phasenlagenzuordnung erfolgt dadurch automatisch mit.

Es müssten bei einer Wendeeinrichtung mindestens zwei der Mittel, bei zwei Wendeeinrichtungen mindestens drei der Mittel usw. vorgesehen werden. Dabei ist es zweckmäßig, daß mit einer Umstellung der Druckmaschine das Mittel zur Aufbringung der Gegenmomente für den in seiner Winkelrelation zur übrigen Maschine verstellten Maschinenbereich derart mitverstellt wird, daß die Gegenmomente in der richtigen Phasenlage aufbringbar sind. Dies hat den Vorteil, daß mit der Umstellung von Schöndruck auf Wiederdruck oder umgekehrt die Mittel zur Aufbringung der Gegenmomente derart mitverstellt werden, daß sie immer die richtige Einstellung aufweisen. Bei einer Anbringung von Kurvengetrieben an Zylindern oder Trommeln erfolgt beispielsweise eine derartige Mitverstellung, so daß automatisch immer die richtige Phasenlage der Teilmomente für die Kompensation eingestellt ist. Bei einer derartigen Ausgestaltung ist die richtige Phasenlage sozusagen mechanisch hinterlegt.

Das Mittel zur Kompensation der Momente, die zur Schwingung in einer Eigenform anregen, kann auf verschiedenste Art und Weise ausgestaltet sein. Beispielsweise kann es sich bei dem Mittel um einen Motor handeln oder um eine hydraulische Momentenaufbringung. Dann ist eine Steuereinrichtung erforderlich, in der die Größe und/oder die Phasenlage des/der Gegenmomente hinterlegt sind. Die Hinterlegung mehrerer Gegenmomente und gegebenenfalls deren Phasenlage ist dann erforderlich, wenn verschiedene Parameter, beispielsweise verschiedene Drehzahlen der Druckmaschine berücksichtigt werden sollen. Derartige Parameter können selbstverständlich auch verschiedene Papierformate im Widerdruck sein oder die bereits beschriebene Umstellung von Schönauf Wiederdruck oder umgekehrt.

Eine besonders einfache Ausgestaltung des Mittels sieht vor, daß es sich um mindestens ein Kurvengetriebe handelt. Solch Kurvengetriebe lassen sich auf verschiedene Art und Weise ausgestalten.

Ein Vorschlag für die Ausgestaltung als Kurvengetriebe sieht vor, daß eine mit einem Zahnrad des Antriebsstrangs in fester Verbindung stehende Kurvenscheibe vorgesehen ist, welche durch eine Rolle mit einer Kraft beaufschlagt wird. Umgekehrt kann natürlich auch die Kurvenscheibe feststehen und die Rollenlagerung mit einem Zahnrad in fester Verbindung stehen. Dabei kann die Kraftbeaufschlagung mittels eines Energiespeichers, beispielsweise eines federbelasteten Hebels erfolgen. Durch diese einfache Ausgestaltung wird das erforderliche Gegenmoment unabhängig von der Drehzahl der Maschine aufgebracht. Dies ist in vielen Fällen bereits ausreichend und führt zu guten Ergebnissen. Wird vorgesehen, daß auf die Rolle zusätzlich eine Ausgleichsmasse wirkt, so wird durch deren Trägheit eine drehzahlabhängige Momentenbeaufschlagung erreicht. Es kann die Kraftbeaufschlagung auch mittels eines Doppelhebels erfolgen, der am Zahnrad oder einem mit diesem verbundenen Arm gelagert ist, an einem Ende die Rolle und am anderen Ende eine Ausgleichsmasse trägt.

Die beiden vorgenannten Maßnahmen können miteinander kombiniert werden, indem sowohl ein Energiespeicher als auch eine Ausgleichsmasse auf den Rollenhebel wirkt. Auf diese Weise erhält man ein Mittel zur Aufbringung von Gegenmomenten, das zunächst ein drehzahlunabhängiges Teilgegenmoment aufbringt und mit zunehmender Drehzahl ein zusätzliches Teilgegenmoment vorsieht, das der Veränderung des erforderlichen Gegenmoments bei einer höheren Drehzahl der Maschine Rechnung trägt. Auf diese Weise lassen sich sehr einfach die Gegenmomente für verschiedene Maschinendrehzahlen sozusagen mechanisch hinterlegen.

Die gemachten Vorschläge für die Umsetzung des erfindungsgemäßen Prinzips sind selbstverständlich nur eine beispielhafte Aufzählung, eine Vielzahl von Möglichkeiten zur Hinterlegung der erforderlichen Gegenmomente bezüglich Größe und Phasenlage sowie zur Aufbringung der Gegenmomente, auch in Form mehrerer Teilmomente, sind möglich.

Die Erfindung wird nachfolgend anhand der Zeichnung erläutert. Es zeigen
- **Fig. 1**: eine Druckmaschine mit der symbolischen Darstellung einer Vorrichtung zur Durchführung des erfindungsgemäßen Verfahrens,
- **Fig. 1a**: eine erste Eigenform einer Druckmaschine,
- **Fig. 1b**: Schwingungen in der ersten Eigenform,
- **Fig. 1c**: eine zweite Eigenform einer Druckmaschine,
- **Fig. 1d**: Schwingungen in der zweiten Eigenform,
- **Fig. 2**: ein Mittel zur Einbringung von Drehmomenten,
- **Fig. 3**: ein Mittel zur geschwindigkeitsabhängigen Einbringung von Drehmomenten und
- **Fig. 4**: einen Motor mit Steuerung zur Einbringung von Drehmomenten gemäß der Erfindung.

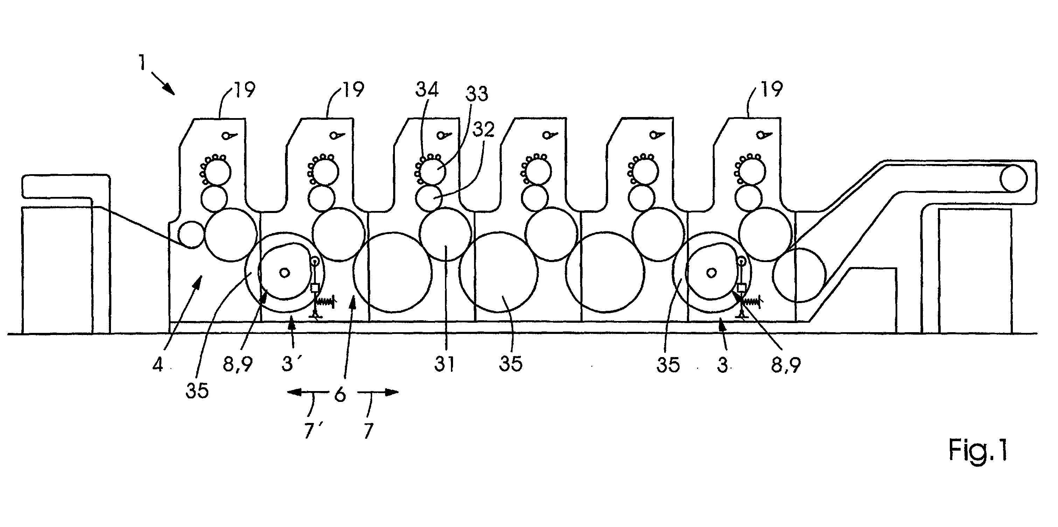

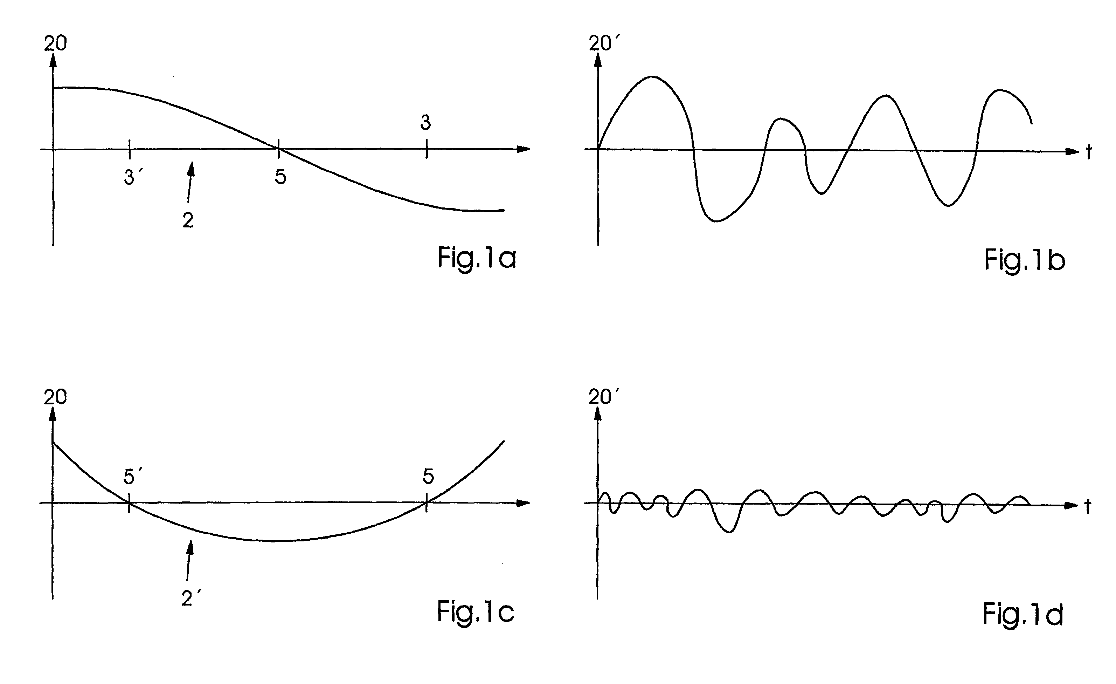

**Fig. 1** zeigt eine Druckmaschine 1 mit der symbolischen Darstellung einer Vorrichtung zur Durchführung des erfindungsgemäßen Verfahrens. Die Druckmaschine 1 weist sechs Druckwerke 19 auf, wobei jedes Druckwerk einen Druckzylinder 31, einen Gummizylinder 32, einen Plattenzylinder 33 und ein Farbwerk 34 enthält. Zwischen den Druckwerken befinden sich Umführtrommeln 35, welche mit den Druckzylindern 31 einen Zahnräderzug bilden, der den Antriebsstrang 4 der Druckmaschine darstellt. Durch verschiedene Anregungen wie Zylinderkanäle und sonstige zu einem diskontinuierlichen Verlauf führende Elemente bilden sich entlang des Antriebsstranges 4 Drehschwingungen aus, die zu Schwingungen in Eigenformen der Druckmaschine 1 führen. Diese Gesamtschwingung ist eine Summe aus verschiedenen Schwingungen in verschiedenen Eigenformen 2, 2'. **Fig. 1a** zeigt als Beispiel eine erste Eigenform 2 einer Druckmaschine 1. Dabei ist die Höhe der Amplitudenverteilung 20 in der Eigenform 2 über den oben bei Fig. 1 dargestellten Bereich der Druckmaschine 1 aufgetragen. Die maschinenspezifische Eigenform weist einen Nulldurchgang 5 auf und 3 und 3' bezeichnet die Orte für die gewählte Einbringung der Gegenmomente.

**Fig. 1b** zeigt ein Beispiel von Schwingungen, die der 1. Eigenform 2 zuzurechnen sind, in ihrem Amplituden (20')- Zeitverlauf (t). Die dieser ersten Eigenform zuzurechnenden Schwingungen sind in der Regel die weitaus stärksten.

**Fig. 1c** zeigt eine zweite Eigenform 2' der Druckmaschine 1. Sie weist zwei Nullgänge 5 auf.

**Fig. 1d** zeigt die der zweiten Eigenform zuzurechnenden Schwingungen in ihrem Amplituden (20')- Zeitverlauf (t).

Entsprechend treten noch weitere Eigenformen auf, wobei die ihnen zuzurechnenden Schwingungen in der Regel so gering sind, daß sie nicht kompensiert werden brauchen.

Der Grundgedanke der Erfindung besteht darin, daß gegen die einer Eigenform 2, 2' zuzurechnenden Schwingung gezielt vorgegangen werden kann, indem Gegenmomente gegen die, diese Schwingungen anregenden Momente von vornherein aufgebracht werden. Dies wird zweckmäßigerweise in einem Bereich vorgenommen, in dem die Eigenform relativ hohe Amplituden 20 aufweist. So wurde bei der in Fig. 1 dargestellten Druckmaschine 1 als Ort 3 für die Ermittlung und Einbringung eines Gegenmoments die Umführtrommel 35 vor dem letzten Druckwerk 19 gewählt. Für die Einbringung des Gegenmoments wurde am Zahnrad der Umführtrommel 35 als Mittel 8 zur Einbringung von Drehmomenten ein Kurvengetriebe 9 angeordnet. Dabei sind die Kurvenscheibe 10 und die durch eine Rolle 11 aufgebrachte Kraft derart ausgestaltet und gewählt, daß das erforderliche Gegenmoment nach Betrag- und Phasenlage in den Antriebsstrang 4 eingeleitet werden kann.

Befindet sich in einer derartigen Druckmaschine 1 eine Wendeeinrichtung 6, so kann, wie dargestellt, jedem an die Wendeeinrichtung 6 angrenzenden Maschinenbereich 7 und 7' ein Mittel 8 zur Einbringung von Drehmomenten zugeordnet werden. Im vorliegenden Fall wurde dem Maschinenbereich 7' an dem weiteren Ort 3' ebenfalls ein Kurvengetriebe 9 zugeordnet. Dieses befindet sich an der ersten Umführtrommel 35. Selbstverständlich könnten die Mittel 8 zur Einbringung von Drehmomenten auch an den Druckzylindern 31 angebracht werden. Möglich wäre auch eine Anbringung an Gummizylindern 32 oder Plattenzylindern 33.

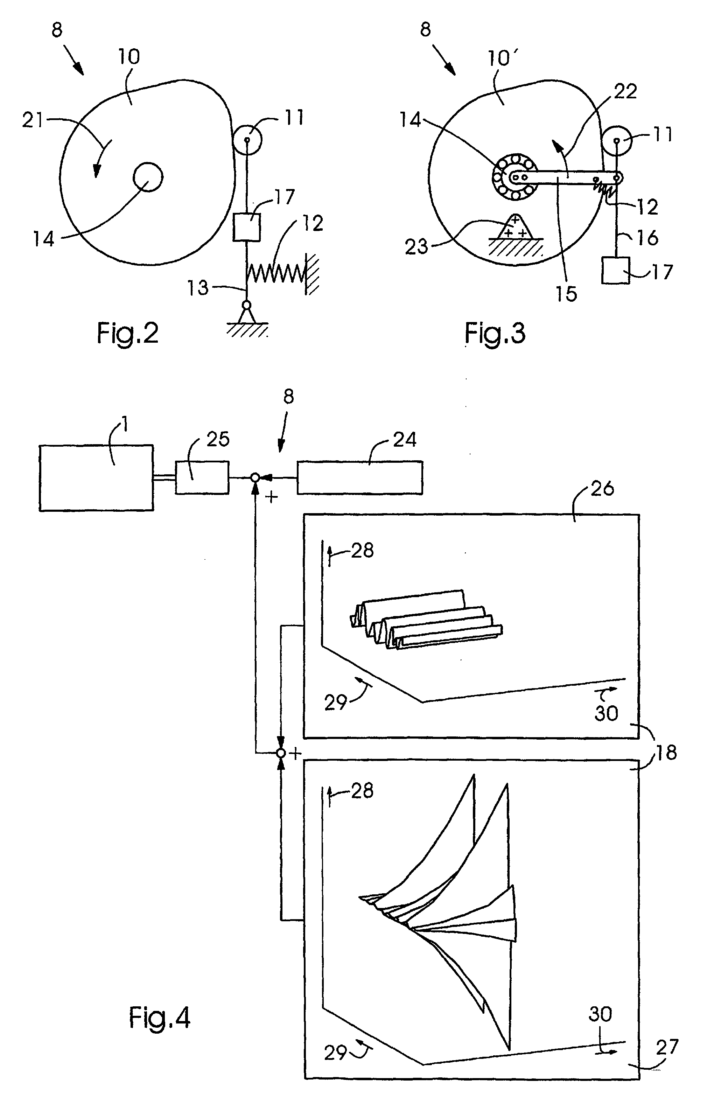

**Fig. 2** zeigt ein Mittel 8 zur Einbringung von Drehmomenten, das als Kurvengetriebe 9 ausgebildet ist. Auf einem Zylinderzapfen 14 oder dem Zapfen einer Trommel 35 ist eine Kurvenscheibe 10 befestigt, die sich in Richtung des Pfeils 21 mit dem Zylinder oder der Trommel dreht. Auf der Kurvenscheibe 10 läuft eine Rolle 11, die an einem Rollenhebel 13 befestigt ist, welcher durch eine Feder 12 mit einer Kraft beaufschlagt wird. Die Ausgestaltung und Anordnung der Kurvenscheibe 10 sowie die Kraft der Feder 12 sind derart ausgelegt, daß die erforderlichen Gegenmomente erzielt werden. Bei dieser Ausgestaltung des Kurvengetriebes 9 wird unabhängig von der Drehzahl immer dasselbe Gegenmoment aufgebracht. Dies ist für eine Vielzahl von Anwendungsfällen ausreichend. Wird dem Rollenhebel 13 noch eine Ausgleichsmasse 17 zugeordnet, so wird durch dessen Trägheit das aufgebrachte Gegenmoment geschwindigkeitsabhängig.

**Fig. 3** zeigt ein Mittel 8 zur geschwindigkeitsabhängigen Einbringung von Drehmomenten in Form eines Kurvengetriebes 9'. Die feststehende Kurvenscheibe 10' ist mittels einer Befestigung 23 mit dem Maschinengehäuse verbunden. An dem Zylinderzapfen 14 oder Zapfen einer Trommel befindet sich ein Arm 15, der in Richtung des Pfeils 22 mit dem Zylinder oder der Trommel umläuft. Am Arm 22 ist schwenkbar ein Doppelhebel 16 befestigt, der an einem Ende drehbar die Rolle 11 und am anderen Ende eine Ausgleichsmasse 17 trägt. Durch die Anbringung einer Feder 12 wird die Anlage der Rolle 11 an der Kurvenscheibe 10' garantiert und ein geschwindigkeitsunabhängiges Gegenmoment ebenfalls eingebracht. Die Geschwindigkeitsabhängigkeit ergibt sich bei diesem Ausführungsbeispiel daraus, daß die Ausgleichsmasse 17 mit zunehmender Drehzahl einer zunehmenden Zentrifugalkraft sowie Trägheitskräften unterworfen ist und daher die Rolle 11 mit einer drehzahlabhängigen Kraft beaufschlagt.

**Fig. 4** zeigt einen Motor 25, der die Druckmaschine 1 mit den entsprechenden Gegenmomenten beaufschlagt. Bei dieser Ausführungsform kann durch eine elektrische Steuerung 18 beispielsweise dasselbe bewirkt werden, wie durch die Kombination zweier Kurvengetriebe 9 und 9', wie sie oben beschrieben wurden. Dabei kann der Motor 25 ein separater Motor oder der Antriebsmotor der Druckmaschine 1 sein. Letzteres jedoch nur, wenn er nicht im Nulldurchgang 5 einer zu kompensierenden Eigenform liegt. Für die Steuerung des Motors 25 ist neben der normalen Motorsteuerung 24 eine Steuerung 18 vorgesehen, die den Motor 25 zusätzlich mit dem Strom für die Erzeugung der Gegenmomente beaufschlagt. Im dargestellten Ausführungsbeispiel ist sowohl ein drehzahlkonstanter Anteil 26 als auch ein drehzahlvariabler Anteil 27 hinterlegt. Die Darstellungen symbolisieren die hinterlegten Gegenmomente, wobei in den räumlichen Darstellungen die Amplituden 28 der erforderlichen Gegenmomente gegen den Drehwinkel 29 und die Maschinengeschwindigkeit 30 in Umdrehungen pro Stunde aufgetragen sind. Aus der Summe des drehzahlkonstanten Anteils 26 und des drehzahlvariablen Anteils 27 ergibt sich das erforderliche Gegenmoment für die jeweilige Drehzahl der Druckmaschine 1.

Die Erläuterungen sind selbstverständlich nur beispielhaft, weitere Möglichkeiten der Umsetzung des Erfindungsgedankens sind denkbar. Beispielsweise könnte auch eine hydraulische Aufbringung von Gegenmomenten mit einer entsprechenden Hydrauliksteuerung, z. B. einer Öldrucksteuerung, erfolgen.

### Bezugszeichenliste

- 1: Druckmaschine
- 2,2', ...: Eigenformen der Schwingungen einer Druckmaschine (2 - erste Eigenform, 2' - zweite Eigenform)
- 3: Ort für Ermittlung und Einbringung eines Gegenmoments
- 3': weiterer Ort für die Einbringung eines Gegenmoments
- 4: Antriebsstrang
- 5: Nullwert der Eigenform (Nulldurchgang)
- 6: Wendeeinrichtung
- 7,7': an eine Wendeeinrichtung angrenzender Maschinenbereich
- 8: Mittel zur Einbringung von Drehmomenten
- 9, 9': Kurvengetriebe
- 10, 10': Kurvenscheibe (10 - rotierend, 10' - feststehend)
- 11: Rolle
- 12: Feder
- 13: Rollenhebel
- 14: Zylinderzapfen
- 15: Arm
- 16: Doppelhebel
- 17: Ausgleichsmasse
- 18: Steuerung
- 19: Druckwerke
- 20: Amplitudenverteilung der Eigenform
- 20': Amplituden der Schwingungen
- 21: Pfeil: Drehung der Kurvenscheibe
- 22: Pfeil: Drehung des Arms
- 23: Befestigung
- 24: normale Motorsteuerung
- 25: Motor
- 26: drehzahlkonstanter Anteil
- 27: drehzahlvariabler Anteil
- 28: Amplituden der erforderlichen Gegenmomente
- 29: Drehwinkel
- 30: Maschinengeschwindigkeit in Umdrehungen pro Stunde
- 31: Druckzylinder
- 32: Gummizylinder
- 33: Plattenzylinder
- 34: Farbwerk
- 35: Umführtrommel

## Patentansprüche

1. Verfahren zur Kompensation der Drehschwingungen einer Druckmaschine (1) durch Einbringung von Drehmomenten, die die Schwingungsanregung kompensieren,
**dadurch gekennzeichnet,**
**daß** mindestens eine der Eigenformen (2, 2', ...) einer Druckmaschine (1) bestimmt wird, daß für mindestens einen Ort (3, 3') des Antriebsstranges (4) der Druckmaschine (1), an dem die Eigenform (2, 2', ...) nicht Null (5) ist, das jeweilige Gegenmoment für die Kompensation der Momente, die zur Schwingung in der Eigenform (2, 2', ...) anregen, ermittelt und hinterlegt wird und daß das Gegenmoment am entsprechenden Ort (3, 3') derart aufgebracht wird, daß durch die Aufbringung des mindestens einen Gegenmoments die Schwingung maximal reduziert wird.

2. Verfahren nach Anspruch 1,
**dadurch gekennzeichnet,**
**daß** als Ort (3) für die Aufbringung eines Gegenmoments ein Ort (3) gewählt wird, an dem die Amplituden der Schwingung in der Eigenform (2, 2', ...) hoch sind.

3. Verfahren nach Anspruch 1 oder 2,
**dadurch gekennzeichnet,**
**daß** mehrere Eigenformen (2, 2', ...) einer Druckmaschine (1) zur Bestimmung von Gegenmomenten herangezogen werden.

4. Verfahren nach einem der Ansprüche 1 bis 3,
**dadurch gekennzeichnet,**
**daß** die Bestimmung der Gegenmomente für eine mittlere Maschinendrehzahl erfolgt.

5. Verfahren nach einem der Ansprüche 1 bis 3,
**dadurch gekennzeichnet,**
**daß** die Gegenmomente für verschiedene Maschinendrehzahlen bestimmt werden.

6. Verfahren nach einem der Ansprüche 1 bis 5,
**dadurch gekennzeichnet,**
**daß** für eine Änderung der Phasenlage der erforderlichen Gegenmomente mindestens zwei Teilmomente in den Antriebsstrang (4) eingebracht werden, deren Phasenlage zueinander entsprechend verstellt wird.

7. Verfahren nach einem der Ansprüche 1 bis 6,
**dadurch gekennzeichnet,**
**daß** für eine Druckmaschine (1) mit Widerdruckbetrieb für jeden an eine Wendeeinrichtung (6) angrenzenden Maschinenbereich (7, 7', ...) die Gegenmomente separat bestimmt werden und daß gesondert für jeden Maschinenbereich (7, 7',...) die entsprechenden Gegenmomente aufgebracht werden.

8. Vorrichtung zur Durchführung eines Verfahrens nach einem der Ansprüche 1 bis 7 mit mindestens einem Mittel (8) zur Einbringung von Drehmomenten in den Antriebsstrang (4) einer Druckmaschine (1), zur Kompensation von Schwingungsanregungen,
**dadurch gekennzeichnet,**
**daß** das mindestens eine Mittel (8) an einem Ort (3, 3') des Antriebsstranges (4) angeordnet ist, an dem die Eigenform (2,2', ...), deren Anregung zu kompensieren ist, nicht Null ist, daß das Moment für die Kompensation der Momente, die zur Schwingung in der Eigenform (2,2', ...) anregen, dem mindestens einen Mittel (8) eingegeben ist und das mindestens eine Mittel (8) das Gegenmoment dem Antriebsstrang (4) vermittelt.

9. Vorrichtung nach Anspruch 8,
**dadurch gekennzeichnet,**
**daß** das Mittel (8) an einem Ort (3) des Antriebsstranges (4) angeordnet ist, in dem die Amplituden der Eigenform (2,2', ...) hoch sind.

10. Vorrichtung nach Anspruch 8 oder 9,
**dadurch gekennzeichnet,**
**daß** weitere Mittel (8) zur Aufbringung von weiteren Gegenmomenten angeordnet sind, wobei die weiteren Gegenmomente der Kompensation der Momente dienen, die zur Schwingung in weiteren Eigenformen (2',...) anregen.

11. Vorrichtung nach einem der Ansprüche 8 bis 10,
**dadurch gekennzeichnet,**
**daß** das Mittel (8) derart ausgestaltet ist, daß Gegenmomente für verschiedene Maschinenparameter hinterlegt und aufbringbar sind.

12. Vorrichtung nach einem der Ansprüche 8 bis 11,
**dadurch gekennzeichnet,**
**daß** bei Druckmaschinen (1) mit mindestens einer Wendeeinrichtung (6) jedem an diese angrenzenden Maschinenbereich (7,7', ...) ein Mittel (8) zur Aufbringung der Gegenmomente zugeordnet ist.

13. Vorrichtung nach Anspruch 12,
**dadurch gekennzeichnet,**
**daß** mit einer Umstellung der Druckmaschine (1) zwischen Schöndruck- und Widerdruckbetrieb das Mittel (8) zur Aufbringung der Gegenmomente für den in seiner Winkelrelation zur übrigen Maschine verstellten Maschinenbereich (7 oder 7') derart mitverstellt wird, daß die Gegenmomente in der richtigen Phasenlage aufbringbar sind.

14. Vorrichtung nach einem der Ansprüche 8 bis 13,
**dadurch gekennzeichnet,**
**daß** das Mittel (8) ein Motor ist.

15. Vorrichtung nach einem der Ansprüche 8 bis 13,
**dadurch gekennzeichnet,**
**daß** das Mittel (8) eine hydraulische Momentenaufbringung ist.

16. Vorrichtung nach Anspruch 11 und 14 oder 15,
**dadurch gekennzeichnet,**
**daß** einer Steuerung (18) Gegenmomente für verschiedene Maschinendrehzahlen eingegeben sind.

17. Vorrichtung nach einem der Ansprüche 8 bis 13,
**dadurch gekennzeichnet,**
**daß** das Mittel (8) mindestens ein Kurvengetriebe (9, 9') ist.

18. Vorrichtung nach Anspruch 17,
**dadurch gekennzeichnet,**
**daß** das Kurvengetriebe (9) eine mit einem Zahnrad des Antriebsstranges (4) in fester Verbindung stehende Kurvenscheibe (10) aufweist, welche durch eine Rolle (11) mit einer Kraft beaufschlagt wird.

19. Vorrichtung nach Anspruch 17,
**dadurch gekennzeichnet,**
**daß** das Kurvengetriebe (9') eine feststehende Kurvenscheibe (10') aufweist und durch eine Rolle (11) mit einer Kraft beaufschlagt wird, die mittels eines mit einem Zylinderzapfen (14) verbundenen Arms (15) umläuft.

20. Vorrichtung nach Anspruch 18 oder 19,
**dadurch gekennzeichnet,**
**daß** die Kraftbeaufschlagung mittels eines auf einen Rollenhebel (13) wirkenden Energiespeichers (12) erfolgt.

21. Vorrichtung nach den Ansprüchen 18 bis 20,
**dadurch gekennzeichnet,**
**daß** auf die Rolle (11) eine Ausgleichsmasse (17) wirkt.

## Claims

1. Method for compensating the rotational vibrations of a printing press (1) by introducing torques which compensate the vibration excitation,
**characterized in**
**that** at least one of the characteristic forms (2, 2', ...) of a printing press (1) is determined, that the respective counter-torque for compensating the torques that excite vibrations in the characteristic form (2, 2',...) are determined and stored for at least one location (3, 3') of the drive train (4) of the printing press (1) at which location the characteristic form (2, 2',...) is not zero (5), and that the counter-torque is applied at the corresponding location (3, 3') such that the vibration is reduced to a maximum extent by the application of the counter-torque.

2. Method according to claim 1,
**characterized in**
**that** the location (3) for the application of a counter-torque is chosen to be a location (3) at which the amplitudes of the vibrations in the characteristic form (2,2',...) are high.

3. Method according to claim 1 or 2,
**characterized in**
**that** several characteristic forms (2, 2',...) of a printing press (1) are taken into account for the determination of counter-torques.

4. Method according to one of claims 1 to 3,
**characterized in**
**that** the determination of the counter-torques is performed for an average rotational speed of the press.

5. Method according to one of claims 1 to 3,
**characterized in**
**that** the counter-torques are determined for various rotational speeds of the press.

6. Method according to one of claims 1 to 5,
**characterized in**
**that** to change the phase relationship of the required counter-torques at least two partial torques are introduced into the drive train (4) and that the phase relationship of the two partial torques with respect to each other is changed accordingly.

7. Method according to one of claims 1 to 6,
**characterized in**
**that** in a printing press (1) with a perfecting mode the counter-torques for every press region (7, 7',...) adjacent to a turning device (6) are determined individually and that the appropriate counter-torques are applied individually for every press region (7, 7',...).

8. Device for implementing a method according to one of claims 1 to 7, the device comprising at least one means (8) for introducing torques into the drive train (4) of a printing press (1) in order to compensate vibration excitations,
**characterized in**
**that** the at least one means (8) is provided at a location (3, 3') of the drive train (4) at which location the characteristic form (2, 2',...) the excitation of which is to be compensated is not zero, that the torque for compensating the torques exciting vibrations in the characteristic form (2, 2',...) is input into the at least one means (8) and that the at least one means (8) applies the counter-torque to the drive train (4).

9. Device according to claim 8,
**characterized in**
**that** the means (8) is arranged at a location (3) of the drive train (4) at which the amplitudes of the characteristic form (2, 2',...) are high.

10. Device according to claim 8 or 9,
**characterized in**
**that** further means (8) for applying further counter-torques are provided, the further counter-torques serving the purpose of compensating the torques that excite vibrations in further characteristic forms (2',...).

11. Device according to one of claims 8 to 10,
**characterized in**
**that** the means (8) is constructed such that counter-torques for various machine parameters are stored and applicable.

12. Device according to one of claims 8 to 11,
**characterized in**
**that** for printing presses (1) having at least one turning device (6), each press region (7, 7') adjacent to a turning device (6) is assigned a means (8) for applying the counter-torques.

13. Device according to claim 12,
**characterized in**
**that**, upon a changeover of the printing press (1) between straight printing and perfecting, the means (8) for applying the counter-torques for the press region (7 or 7') that has been adjusted with respect to the rest of the press in terms of its angular relationship is co-adjusted in such a way that the counter-torques are applicable in the correct phase relationship.

14. Device according to one of claims 8 to 13,
**characterized in**
**that** the means (8) is a motor.

15. Device according to one of claims 8 to 13,
**characterized in**
**that** the means (8) is a hydraulic application of torques.

16. Device according to one of claims 11 and 14 or 15,
**characterized in**
**that** counter-torques for various rotational speeds of the press are input into a control (18).

17. Device according to one of claims 8 to 13,
**characterized in**
**that** the means (8) is at least one cam mechanism (9, 9').

18. Device according to claim 17,
**characterized in**
**that** the cam mechanism (9) comprises a cam disk (10) which is in firm connection with a gearwheel of the drive train (4) and to which a force is applied by a roller (11).

19. Device according to claim 17,
**characterized in**
**that** the cam mechanism (9') includes a stationary cam disk (10') and that a roller (11) applies a force to the cam mechanism (9'), the roller revolving by means of an arm (15) connected to a cylinder journal (14).

20. Device according to claim 18 or 19,
**characterized in**
**that** the application of a force is achieved by means of an energy storage device (12) acting on a roller lever (13).

21. Device according to claims 18 to 20,
**characterized in**
**that** a compensating mass (17) acts on the roller (11).

## Revendications

1. Procédé de compensation des vibrations ou oscillations de torsion d'une machine à imprimer (1), par l'application de couples qui compensent l'excitation vibratoire,
**caractérisé en ce que** l'on détermine au moins l'un des modes propres (2, 2', ...) d'une machine à imprimer (1), **en ce que** pour au moins un endroit (3, 3') de la ligne de transmission d'entraînement (4) de la machine à imprimer (1), où le mode propre (2, 2', ...) n'est pas nul (5), on détermine et consigne le couple antagoniste pour la compensation des couples qui produisent l'excitation vibratoire dans le mode propre (2, 2', ...), et **en ce que** le couple antagoniste est appliqué à l'endroit correspondant (3, 3') de façon telle que par l'application dudit au moins un couple antagoniste, la vibration soit réduite de manière maximale.

2. Procédé selon la revendication 1, **caractérisé en ce qu'**en guise d'endroit (3) pour l'application d'un couple antagoniste, on choisit un endroit (3) où les amplitudes de la vibration dans le mode propre (2, 2', ..) sont élevées.

3. Procédé selon la revendication 1 ou 2, **caractérisé en ce que** l'on prend en considération plusieurs modes propres (2, 2', ...) d'une machine à imprimer (1) pour déterminer des couples antagonistes.

4. Procédé selon l'une des revendications 1 à 3, **caractérisé en ce que** la détermination des couples antagonistes est effectuée pour une vitesse de rotation moyenne de la machine.

5. Procédé selon l'une des revendications 1 à 3, **caractérisé en ce que** les couples antagonistes sont déterminés pour différentes vitesses de rotation de la machine.

6. Procédé selon l'une des revendications 1 à 5, **caractérisé en ce que** pour une variation de la position de phase des couples antagonistes nécessaires, on envoie dans la ligne de transmission d'entraînement (4) au moins deux couples partiels dont les positions de phase sont décalées l'une par rapport à l'autre de manière correspondante.

7. Procédé selon l'une des revendications 1 à 6, **caractérisé en ce que** pour une machine à imprimer (1) fonctionnant en retiration, on détermine les couples antagonistes séparément pour chaque zone de machine (7, 7', ...) voisine d'un dispositif de retournement (6), et l'on applique les couples antagonistes correspondants, de manière distincte pour chaque zone de machine (7, 7', ...).

8. Dispositif pour la mise en oeuvre d'un procédé selon l'une des revendications 1 à 7, comprenant au moins un moyen (8) destiné à appliquer des couples dans la ligne de transmission d'entraînement (4) d'une machine à imprimer (1), pour la compensation d'excitations vibratoires,
**caractérisé en ce que** ledit au moins un moyen (8) est disposé en un endroit (3, 3') de la ligne de transmission d'entraînement (4) où le mode propre (2, 2', ...), dont l'excitation doit être compensée, n'est pas nul, **en ce que** le couple pour la compensation des couples qui provoquent l'excitation vibratoire dans le mode propre (2, 2', ...), est fourni audit au moins un moyen (8), et **en ce que** ledit au moins un moyen (8) transmet le couple antagoniste à la ligne de transmission d'entraînement (4).

9. Dispositif selon la revendication 8, **caractérisé en ce que** le moyen (8) est disposé en un endroit (3) de la ligne de transmission d'entraînement (4), où les amplitudes du mode propre (2, 2', ...) sont élevées.

10. Dispositif selon la revendication 8 ou 9, **caractérisé en ce que** sont prévus et disposés d'autres moyens (8) destinés à appliquer d'autres couples antagonistes, lesdits autres couples antagonistes servant à compenser les couples qui produisent l'excitation vibratoire dans d'autres modes propres (2", ...).

11. Dispositif selon l'une des revendication 8 à 10, **caractérisé en ce que** le moyen (8) est conçu de façon telle qu'il soit possible de consigner et d'appliquer des couples antagonistes pour différents paramètres de machine.

12. Dispositif selon l'une des revendication 8 à 11, **caractérisé en ce que** dans le cas de machinés à imprimer (1) comprenant au moins un dispositif de retournement (6), un moyen (8) pour l'application des couples antagonistes est associé à chaque zone de machine (7, 7', ...) voisine dudit dispositif de retournement.

13. Dispositif selon la revendication 12, **caractérisé en ce qu'**avec une conversion de la machine à imprimer (1) entre un fonctionnement en impression recto et en retiration, le moyen (8) destiné à appliquer les couples antagonistes est réglé simultanément en conséquence pour la zone de machine (7 ou 7') modifiée dans sa relation angulaire par rapport au restant de la machine, de façon telle que le couple antagoniste puisse être appliqué dans la position de phase correcte.

14. Dispositif selon l'une des revendication 8 à 13, **caractérisé en ce que** le moyen (8) est un moteur.

15. Dispositif selon l'une des revendication 8 à 13, **caractérisé en ce que** le moyen (8) est un système hydraulique d'application de couple.

16. Dispositif selon les revendications 11 et 14 ou 15, **caractérisé en ce que** l'on a fourni à une commande (18) des couples antagonistes pour différentes vitesses de rotation de la machine.

17. Dispositif selon l'une des revendication 8 à 13, **caractérisé en ce que** le moyen (8) est au moins une transmission à came (9, 9').

18. Dispositif selon la revendication 17, **caractérisé en ce que** la transmission à came (9) comprend un disque de came (10) qui est en liaison fixe avec une roue dentée de la ligne de transmission d'entraînement (4), et qui est sollicité par une force par l'intermédiaire d'un galet (11).

19. Dispositif selon la revendication 17, **caractérisé en ce que** la transmission à came (9') comprend un disque de came (10') qui est en position fixe et est sollicité avec une force par l'intermédiaire d'un galet (11) qui est en révolution au moyen d'un bras (15) relié à un tourillon de cylindre (14).

20. Dispositif selon la revendication 18 ou 19, **caractérisé en ce que** la sollicitation par la force s'effectue au moyen d'un accumulateur d'énergie (12) agissant sur un levier de galet (13).

21. Dispositif selon les revendications 18 à 20, **caractérisé en ce qu'**une masse de compensation (17) agit sur le galet (11).
